## Europäisches Patentamt

## European Patent Office

## Office européen des brevets

(11) Veröffentlichungsnummer: **0 277 346**
**A2**

(12) **EUROPÄISCHE PATENTANMELDUNG**

(21) Anmeldenummer: **87119006.2**

(22) Anmeldetag: **22.12.87**

(51) Int. Cl.⁴: **C08F 220/18** , C08J 3/14 ,
//(C08F220/18,220:00,222:00,
212:12)

(30) Priorität: **07.01.87 DE 3700248**

(43) Veröffentlichungstag der Anmeldung:
**10.08.88 Patentblatt 88/32**

(84) Benannte Vertragsstaaten:
**BE CH DE FR GB IT LI NL**

(71) Anmelder: **BASF Aktiengesellschaft
Carl-Bosch-Strasse 38
D-6700 Ludwigshafen(DE)**

(72) Erfinder: **Vietmeier, Juergen, Dr.
Waldstrasse 112
D-6706 Wachenheim(DE)**
Erfinder: **Pfoehler, Peter, Dr.
Franz-Stuetzel-Strasse 51
D-6720 Speyer(DE)**
Erfinder: **Brauch, Gundo, Dr.
Am Huettenwingert 33
D-6706 Wachenheim(DE)**
Erfinder: **Druschke, Wolfgang, Dr.
Berliner Strasse 28
D-6716 Dirmstein(DE)**
Erfinder: **Zosel, Albrecht, Dr.
Ringweg 9
D-6940 Weinheim(DE)**

(54) **Wässrige Polyacrylat-Dispersionen und deren Verwendung zur Herstellung selbstklebender Gebilde mit guter Tieftemperaturhaftung.**

(57) Diese Erfindung betrifft wäßrige Dispersionen von Copolymerisaten einer Glastemperatur von höchstens -45°C und eines K-Werts über 80 aus mindestens 80 Gew.% Acrylestern 8 bis 12 C-Atome enthaltenden Alkenolen, 1 bis 4-Gew.% $\alpha,\beta$-monoolefinisch ungesättigten Carbonsäuren und/oder deren Amid-Derivaten und 0,1 bis 3 Gew-% $\alpha$-Methylstyrol und deren Verwendung zur Herstellung selbstklebender Gebilde mit guter Haftklebrigkeit bei Temperaturen bis -40°C.

EP 0 277 346 A2

## Wäßrige Polycrylat-Dispersionen und deren Verwendung zur Herstellung selbstklebender Gebilde mit guter Tieftemperaturhaftung

Diese Erfindung betrifft wäßrige Dispersionen von Copolymeren aus Acrylsäureestern von 8 bis 12 C-Atome enthaltenden Alkanolen, die für die Beschichtung flächiger Gebilde zur Herstellung von Haftklebe-Erzeugnissen, die insbesonders auf kalten Oberflächen gute Haftung haben, geeignet sind.

Es sind eine Reihe von wäßrigen Dispersionen von Acrylester-Copolymeren bekannt, die beim Auftrocknen auf flächigen Substraten stark klebrige Filme ergeben. Die Copolymeren leiten sich im allgemeinen von Acrylsäureestern 4 bis 8 C-Atome enthaltender Alkanole ab, die zusätzlich α,β-olefinisch ungesättigte Carbonsäuren, wie Acrylsäure oder Methacrylsäure,sowie andere Comonomere einpolymerisiert enthalten können. So sind aus der britischen Patentschrift 1 259 459 wäßrige Dispersionen von Copolymeren aus 84 bis 94 % ihres Gewichts an Acrylsäureestern 4 bis 8 C-Atome enthaltender Alkanole, 3 bis 6 % ihres Gewichts Acryl-oder Methacrylsäure und 3 bis 10 % ihres Gewichts Methylmethacrylat oder Acrylnitril bekannt, die als Emulgatoren alkoxylierte und sulfatierte Alkylphenole mit 8 bis 14 C-Atomen in den Alkylgruppen enthalten. Daraus hergestellte Filme weisen bei hohem "tack" gute Kohäsion auf, doch läßt ihre Haftung auf Oberflächen mit einer Temperatur von unter 0°C, insbesonders von -20 bis -40°C stark zu wünschen übrig.

Auch die aus der US-PS 4 056 497 bekannten wäßrigen Copolymer-Dispersionen enthalten Haftklebe-Copolymerisate, deren Klebewerte im allgemeinen nicht befriedigen und bei Temperaturen von unter 0°C völlig ungenügend sind. Diese Copolymerisate, die als Hauptkomponente meist höhere Acrylsäureester, wie 2-Ethylhexylacrylat sowie zusätzlich 0,1 bis 10 % α-Halogenalkancarbonsäurevinylester, 0,1 bis 10 % α,β-ethylenisch ungesättigte Carbonsäuren, 0 bis 10 % Hydroxyalkylacrylate sowie gegebenenfalls Acrylnitril einpolymerisiert enthalten, müssen alkalisch vernetzt werden, wodurch leicht Verfärbungen der Klebeschicht auftreten können.

Aus der GB-PS 15 21 716 sind wäßrige Copolymer-Dispersionen bekannt, die mindestens 80 Gew.%, bezogen auf die Monomeren, Acrylsäureester nicht tertiärer 8 C-Atome enthaltender Alkanole enthalten. Diese Polymerisate zeigen gute Wärmestandfestigkeit bei 50°C , sie sind jedoch bei -20°C klebfrei und somit als Haftkleber, der bei tiefer Temperatur verklebt wird, ungeeignet.

thaltender Alkanole enthalten. Diese Polymerisate zeigen gute Wärmestandfestigkeit bei 50°C , sie sind jedoch bei -20°C klebfrei und somit als Haftkleber, der bei tiefer Temperatur verklebt wird, ungeeignet.

Die US-PS 4 371 659 beschreibt wäßrige Copolymer-Dispersionen mit bis zu 75 % Feststoffgehalt, wobei die in Beispiel 1 beschriebene Dispersion hervorragende Haftklebeeigenschaften bei Raumtemperatur zeigt, bei -20°C aber als Haftkleber völlig versagt, obwohl die Glastemperatur bei etwa -40°C liegt.

Allgemein bekannt ist, daß man durch Zusatz von Weichmachern eine gewisse Klebrigkeit bei tiefen Temperaturen auch mit harten Copolymeren erreichen kann. So beschreibt die Technische Information "Haftklebstoffe 3" (BASF AG) eine Weichmacher enthaltende Rezeptur für Anwendungen bei -20°C. Solche Gemische haben zwar eine gewisse Klebrigkeit bei -20°C, ihre Kohäsion ist jedoch völlig ungenügend.

Aufgabe der vorliegenden Erfindung sind nun insbesondere wäßrige Dispersionen von Haftkleber-Copolymeren auf Basis von Acrylsäureestern, die Klebefilme ergeben, die nicht zu Verfärbungen neigen und bei Raumtemperatur gute Klebewerte aufweisen, aber auch bei tiefen Temperaturen von -20°C, im Extremfall von -40°C, noch haftklebrige Eigenschaften bei guter Kohäsion besitzen.

Es wurde gefunden, daß 40 bis 70 %ige wäßrige Dispersionen von Copolymeren einer Glastemperatur von höchstens -45°C und eines K-Werts über 80 aus

    (a) 80 bis 98 % ihres Gewichts nicht tertiären Acrylsäurealkylestern 8 bis 12 C-Atome enthaltender Alkanole,

    (b) 0 bis 18 % ihres Gewichts Acryl-oder Methacrylsäureester 1 bis 4 C-Atome enthaltender Alkanole,
und/oder
Vinylester 2 bis 4 C-Atome enthaltender Carbonsäuren
und/oder
(Meth)-Acrylnitril und/oder Styrol,

    (c) 0,1 bis 4 % ihres Gewichts α,β-mono-olefinisch ungesättigte, 3 bis 5 C-Atome enthaltende Mono und/oder Dicarbonsäuren und/oder deren gegebenenfalls an den Stickstoffatomen durch 1 bis 4 C-Atome enthaltende Alkyl-und/oder Carboxylgruppen substituierte Amiden und/oder Hydroxialkyl(meth)acrylaten mit 2 bis 5 C-Atomen in den Alkylgruppen und

(d) 0,1 bis 3 % ihres Gewichts α-Methylstyrol, den Nachteil der geringen Haftklebrigkeit der Klebefilme bei -20 bis -40°C, auch ohne Weichmacherzusatz, nicht aufweisen.

Geeignete nicht tertiäre Acrylsäurealkylester 8 bis 12 C-Atome enthaltender Alkanole sind besonders 2-Ethylhexylacrylat und Isooctylacrylat sowie n-Octylacrylat, n-Decylacrylat und n-Dodecylacrylat.

Von diesen Acrylsäureestern 8 bis 12 C-Atome enthaltender Alkanole können bis zu 18 Gew.%, bezogen auf die gesamten Monomeren, bzw. auf das Copolymere, durch andere nicht tertiäre Acrylsäurealkylester, wie besonders n-Butylacrylat ersetzt werden, wobei die Glastemperatur des Copolymeren nicht über -45°C liegen darf.

Als Vinylester 2 bis 4 C-Atome enthaltender Carbonsäuren sind solche von geradkettigen Carbonsäuren von besonderem Interesse, wie Vinylacetat, Vinylpropionat und Vinyl-n-butyrat. Auch Gemische aus derartigen Vinylestern können eingesetzt werden. Als Vinylester wird Vinylacetat vorgezogen.

Geeignete Hydroxyalkyl(meth)acrylate sind besonders solche, die sich von 2 bis 5 C-Atome enthaltenden Alkandiolen ableiten, wie vor allem 2-Hydroxyethylacrylat und -methacrylat, 2-Hydroxipropyl-bzw. 3-Hydroxipropylacrylat und -methacrylat und 4-Hydroxybutylacrylat und -methacrylat. In Frage kommt ferner 2-Hydroxy-3-chlor-propylacrylat.

Als mono-olefinisch ungesättigte Carbonsäuren werden Monocarbonsäuren mit 3 bis 4 Kohlenstoffatomen, d.h. Acrylsäure und Methacrylsäure sowie als Dicarbonsäuren, Fumarsäure und Itaconsäure vorgezogen. In Frage kommen auch Gemische aus derartigen Carbonsäuren, sowie Crotonsäure, Maleinsäure und Monoalkylester von Dicarbonsäuren der genannten Art, die meist 1 bis 4 C-Atome im Alkylrest enthalten, wie Maleinsäuremonomethylester, Itaconsäuremonoethylester, Fumarsäuremonomethylester und Maleinsäure-mono-n-butylester. Geeignete Amide derartiger Carbonsäuren sind besonders Acrylamid und Methacrylamid sowie Itaconsäuremono-und -diamid.

Der Gehalt der Copolymeren an einpolymerisierten Monomeren (a) beträgt vorzugsweise 90 bis 95 %, an einpolymerisierten Monomeren (b) 0-2 %, an einpolymerisierten Monomeren (c) vorzugsweise 1 bis 3 Gew.%. Der Gehalt an α-Methylstyrol, auch 2-Phenylpropen genannt, beträgt vorzugsweise 1 bis 2 Gew.%, bezogen auf das Polymere.

Die neuen Copolymer-Dispersionen können die üblichen Emulgier-und Dispergierhilfsmittel in den üblichen Mengen enthalten. Sie enthalten vorzugsweise 0,5 bis 2,5 insbesondere 1 bis 2 Gew.%, bezogen auf die Copolymeren einer Mischung aus einem sulfatierten 12 bis 20 C-Atome enthaltenden Alkohol und einem Natriumsalz eines Sulfobernsteinsäureesters in einem Verhältnis von 1:10 bis 10:1 vorzugsweise 2:10 bis 10:10, sowie 0 bis 2 %, vorzugsweise 0,1 bis 0,5 Gew.%, bezogen auf das Copolymere, alkoxilierte Fettalkohole und/oder Fettamine und/oder Alkylphenole. Die sulfatierten Alkoxylierungsprodukte leiten sich insbesondere von 12 bis 20 C-Atomen enthaltenden gegebenenfalls monoolefinisch ungesättigten Alkanolen, wie Laurylalkohol, Stearylalkohol, Oleylalkohol oder Spermölalkohol oder 12 bis 20 C-Atomen enthaltenden gegebenenfalls monoolefinisch ungesättigten Alkylaminen oder meist 8 bis 12 C-Atome in den Alkylgruppen enthaltenden Alkylphenolen, wie n-Octylphenol, n-Nonylphenol, Iso-Nonylphenol oder n-Dodecylphenol ab, wobei für die Alkoxylierung im allgemeinen Ethylenoxid und/oder Propylenoxid verwendet sein kann und der Alkoxylierungsgrad im allgemeinen 5 bis 80, vorzugsweise 10 bis 30 Mol Alkylenoxid, vorzugsweise Ethylenoxid, je Mol Fettalkohol, Fettamin oder Alkylphenol beträgt. Außerdem sind diese Alkoxylierungsprodukte sulfatiert und werden meist in Form ihrer wasserlöslichen Alkali-oder Ammoniumsalze eingesetzt. Zusätzlich zu den Sulfatierungsprodukten der genannten Art können die neuen Dispersionen auch den zuvor genannten entsprechende, nicht sulfatierte alkoxylierte Fettalkohole, Fettamine oder Alkylphenole enthalten, doch soll deren Anteil am Emulgatorgemisch nicht über 10 Gew.%, bezogen auf die Gesamtmenge des Emulgators betragen. Soweit die Dispersionen sulfatierte und nichtsulfatierte Alkylenoxid-Anlagerungsprodukte der genannten Art enthalten, soll die Gesamtmenge des Emulgators im allgemeinen nicht über 2,5 %, bezogen auf die Menge des Copolymerisates, liegen.

Der K-Wert der neuen Copolymerisate beträgt mindestens 80, vorzugsweise 95 bis 100 und kann entsprechend DIN 53 726 in 0,5 %iger Lösung der Copolymerisate in Tetrahydrofuran bei 20°C bestimmt werden. Die Konzentration der neuen Dispersionen kann in weitem Bereich variiert werden. Bei ihrer Herstellung durch Emulsionspolymerisation fallen sie im allgemeinen in einer Konzentration von 40 bis 70 Gew.% Copolymeres, bezogen auf die Dispersion, an, doch können sie beliebig verdünnt werden. Ihr pH-Wert beträgt von der Herstellung her vorzugsweise 2 bis 7, doch können z.B. bei der Verarbeitung der Dispersionen auch pH-Werte über 7 eingestellt werden. Bevorzugt werden Werte von 4 bis 8.

Die neuen Copolymerisat-Dispersionen können nach dem üblichen Verfahren der Emulsionspolymerisation chargenweise oder kontinuierlich durch Copolymerisation der Monomeren in wäßriger Emulsion hergestellt werden. Dabei können die üblichen wasserlöslichen radikalbildenden Polymerisationsinitiatoren, wie besonders Peroxide, z.B. Natrium-, Kalium-und Ammoniumperoxodisulfat, Wasserstoffperoxid, t-Butylhydroperoxid sowie Perborate in an sich üblichen Mengen, im allgemeinen von 0,05 bis 1, vorzugsweise

3

von 0,2 bis 0,5 Gew.%, bezogen auf die Monomeren, mitverwendet werden. Die Polymerisation wird im allgemeinen bei Temperaturen von 50 bis 100°C, vorzugsweise bei 80 bis 95°C durchgeführt. Bei dem neuen Verfahren ist die Mitverwendung von reduzierend wirkenden Reglern, wobei die Menge an Regler 0,01 bis 0,1 Gew.%, bezogen auf das Polymerisat, betragen kann, von Vorteil.

Geeignete Regler sind beispielsweise Mercaptane, wie tert.-Butylmercaptan und Dodecylmercaptan. Besonders bewährt für die Herstellung der neuen Dispersionen hat sich das Zulaufverfahren, bei dem ein Teil der Monomeren, im allgemeinen 0 bis 10 Gew.% in einer Wasser, Emulgator und Polymerisationsinitiator enthaltenden Vorlage vorgelegt und der Rest der Monomeren sowie der Regler bei Polymerisationstemperatur nach Maßgabe der Polymerisation in emulgierter Form sowie zusätzlich eine wäßrige Lösung weiterer Polymerisationsinitiators zugefahren wird. Dabei kann die Zusammensetzung des Monomerengemischs der Vorlage gleich oder verschieden sein im Vergleich zu mit der Monomerenzusammensetzung des Zulaufs. Es ist auch möglich, daß die Zusammensetzung des Zulaufes durch Zugabe einer im Moment der Zugabe in ihrer Zusammensetzung von dem Zulauf verschiedenen Monomerzusammensetzung zum Zulauf während des Zulaufens geändert wird.

Nach dem neuen Polymerisationsverfahren erhält man wäßrige Copolymerisat-Dispersionen, die besonders wenig Stippen enthalten, wenig zum Schäumen neigen und eine gute Verträglichkeit mit anderen anionischen Polymer-Dispersionen und üblichen Zusatzstoffen und Pigmenten haben. Die neuen Copolymerisat-Dispersionen ergeben beim Auftrocknen klare Filme, die gute Wasser-und Tropenfestigkeit, gute Kohäsion bei Raumtemperatur, außerordentlich hohen Tack und gute Adhäsion, vor allem auch auf Oberflächen mit einer Temperatur von -20°C bei geringem kalten Fluß aufweisen.

Die neuen Copolymerisat-Dispersionen können mit Vorteil zur Herstellung von Haftklebe-Erzeugnissen durch Beschichten flächiger Gebilde verwendet werden. Sie eignen sich insbesondere zur Herstellung von Klebebändern, Klebefolien und Haftkleberetiketten, selbstklebenden Wand-und Bodenbelägen sowie selbstklebenden Antidröhnmaterialien, vor allem, wenn diese Artikel bei tiefen Temperaturen verwendet werden sollen.

Zur Beurteilung der Klebeeigenschaften von flächigen Gebilden, die unter Verwendung der neuen Haftkleber beschichtet sind, wird in den folgenden Beispielen Etikettenpapier derart mit lösungsmittelfreiem Haftkleber beschichtet, daß der Überzug eine Dicke von 25 µm (entsprechend einem Autrag von 25 g/m²) aufweist. Von dem beschichteten Papier werden jeweils 2 cm breite Prüfstreifen verwendet und diese Streifen im Klimaraum bei 23°C und 50 % relativer Luftfeuchtigkeit 24 Stunden gelagert. Zur Bestimmung der Schälfestigkeit wird der Schältest, zur Bestimmung der Scherfestigkeit der Schertest und zur Bestimmung des Tacks bei -20°C der sog. Schlingen-Test wie folgt durchgeführt:

Beim Schältest werden die Prüfstreifen auf eine verchromte Platte aufgeklebt und parallel zur Klebeschicht, d.h. unter einem Winkel von 180°C abgeschält und die dafür notwendige Kraft gemessen. Die Abzugsgeschwindigkeit beträgt 75 mm/Minute und die Messung wird 1 Minute nach der Verklebung bei 23°C durchgeführt.

Als Maß für die Kohäsion der Klebstoffschicht wird der Schertest derart durchgeführt, daß die Prüfstreifen auf ein hochglanzverchromtes Blech mit einer Fläche von 20 × 25 mm aufgepreßt werden. Das Blech wird senkrecht eingespannt und das Ende des Klebestreifens mit 1 000 g belastet. Es wird dann die Zeit bestimmt, bis sich die Verklebung unter der konstanten Zugspannung von 1 000 g bei 23°C löst.

Beim Schlingentest wird ein Prüfstreifen mit beiden Enden in einen Backen der Reißmaschine eingespannt. Die so entstandene Schlinge wird mit 300 mm/min gegen eine -20°C bis -40°C kalten Prüfkörper aus Stahl oder Polyethylen gefahren bis etwa ein Drittel des Prüfstreifens auf der Oberfläche aufliegt. Der Streifen wird sofort abgezogen und die dazu benötigte Kraft registriert. Dabei wird darauf geachtet, daß die Prüfoberfläche nicht beschlagen oder vereist ist.

Die in den folgenden Beispielen angegebenen Teile sind Gewichtsteile. Die darin eingegebenen Glastemperaturen wurden nach ASTM D 3418-2 bestimmt.

Beispiele

Herstellung der Polymerdispersion

Die Polymerisationsreaktionen werden in herkömmlicher Reaktionsapparaturen durchgeführt, die mit Rückflußkühler, Rührer und mehreren Zulaufgefäßen ausgestattet sind. Es wird im allgemeinen so verfahren, daß Wasser sowie Anteile der emulgierten Monomermischung und des Initiators in das Reaktionsgefäß gegeben werden. Diese Reaktionsmischung wird bei der gewünschten Polymerisationstemperatur in üblicher Weise anpolymerisiert. Anschließend werden die restliche emulgierte Monomerenmischung (Zulauf A) und die Initiatorlösung (Zulauf B) sowie gegebenenfalls weitere Zuläufe im Verlauf von 2 bis 3,5 Stunden in das Reaktionsgefäß dosiert. Danach wirde das Reaktionsgemisch noch 1 bis 2 Stunden auf Polymerisationstemperatur gehalten. Nach dem Abkühlen werden die Polymer-Dispersionen z.T. mit Ammoniak oder Alkalihydroxiden auf höhere pH-Werte eingestellt, sowie gegebenenfalls mit weiteren Zusätzen versetzt.

Beispiel 1

Zulauf A: 230 Teile Wasser
590 Teile 2-Ethlylhexylacrylat
2 Teile α-Methylstyrol
12 Teile Acrylsäure
10 Teile Natriumsalz eines Sulfobernsteinsäuredioktylesters

Zulauf B: 26 Teile Wasser
2 Teile Natriumperoxodisulfat

130 Teile Wasser, 8 Teile Zulauf A und 5 Teile Zulauf B werden 15 Minuten bei 85°C gerührt. Anschließend werden die Restmengen Zulauf A und B in 3 Stunden bei 85°C in das Reaktionsgefäß dosiert. Nach Beendigung der Dosierung wird der Reaktionsansatz 2 Stunden bei 85°C gehalten.
Die Glastemperatur des Copolymerisats beträgt -60°C, sein K-Wert 105.

Beispiel 2

Zulauf A: 230 Teile Wasser
590 Teile 2-Ethlylhexylacrylat
2 Teile α-Methylstyrol
2 Teile Acrylsäure
0.6 Teile tert.-Dodecylmerkaptan
3 Teile Dinatriumsalz einer alkylsubstituierten Diphenyletherdisulfonsäure

Zulauf B: 25 Teile Wasser
2 Teile Natriumperoxodisulfat

Die Durchführung der Polymerisationsreaktion erfolgt analog zu Beispiel 1.
Die Glastemperatur beträgt -61°C, sein K-Wert 98.

Beispiel 3

Zulauf A: 230 Teile Wasser
590 Teile 2-Ethlylhexylacrylat
6 Teile α-Methylstyrol
10 Teile Acrylsäure
8 Teile Natriumsalz eines Sulfobernsteinsäuredioktylesters
2 Teile Natriumdodecylsulfat

Zulauf B: 30 Teile Wasser
2 Teile Natriumperoxodisulfat

Die Durchführung der Polymerisationsreaktion erfolgt analog zu Beispiel 1.
Die Glastemperatur des Copolymerisats beträgt -59°C, sein K-Wert 102.

Beispiel 4:

Zulauf A: 160 Teile Wasser
580 Teile 2-Ethlylhexylacrylat
12 Teile α-Methylstyrol
8 Teile Acrylsäure
6 Teile Dinatriumsalz einer alkylsubstituierten Diphenyletherdisulfonsäure

Zulauf B: 100 Teile Wasser
1 Teil Natriumsalz der Hydroxymethansulfinsäure

Bei 60°C werden 130 Teile Wasser, 0,6 Teile tert.-Butylhydroperoxid, 8 Teile Zulauf A und 20 Teile Zulauf B in das Reaktionsgefäß gegeben und 15 Minuten gerührt. Im Anschluß daran werden Zulauf A in 2,5 Stunden und Zulauf B in 3 Stunden kontinuierlich bei 60°C zudosiert. Der Reaktionsansatz wird danach noch 2 Stunden bei 70°C gerührt.
Die Glastemperatur des Copolymerisats beträgt -60°C, sein K-Wert 95.

Beispiel 5

Zulauf A: 180 Teile Wasser
550 Teile 2-Ethlylhexylacrylat
40 Teile Dodecylacrylat
10 Teile α-Methylstyrol
3 Teile Acrylsäure
6 Teile Dinatriumsalz einer alkylsubstituierten Diphenyletherdisulfonsäure

Zulauf B: 40 Teile Wasser
1 Teil L-Ascorbinsäure
0,05 Teile Eisen(II)-sulfat

Zulauf C: 40 Teile Wasser
1 Teil L-Ascorbinsäure

130 Teile Wasser, 5 Teile 30 %iges Wasserstoffperoxid und 20 Teile Zulauf A werden im Reaktionsgefäß vorgelegt. Das Reaktionsgemisch wird auf 60°C erhitzt, und anschließend werden bei dieser Temperatur Zulauf A und B 2,5 Stunden kontinuierlich zudosiert. Danach wird Zulauf C im Verlauf von einer Stunde zudosiert.
Die Glastemperatur des Copolymerisats beträgt -56°C, sein K-Wert 93.

Beispiel 6

Zulauf A: 230 Teile Wasser
540 Teile 2-Ethlylhexylacrylat
12 Teile α-Methylstyrol
10 Teile Acrylsäure
50 Teile Ethylacrylat
8 Teile Natriumsalz eines Sulfobernsteinsäuredioktylesters
2 Teile Natriumdodecylsulfat

Zulauf B: 30 Teile Wasser
2 Teile Natriumperoxodisulfat

Die Durchführung der Polymerisationsreaktion erfolgt analog zu Beispiel 1.
Das Copolymerisat hat die Glastemperatur -55°C und den K-Wert 101.

Vergleichsversuch 1

Zulauf A: 200 Teile Wasser
580 Teile n-Butylacrylat
2 Teile α-Methylstyrol
10 Teile Acrylsäure
8 Teile Natriumsalz eines Sulfobernsteinsäuredioktylesters
2 Teile Natriumdodecylsulfat

Zulauf B: 30 Teile Wasser
2 Teile Natriumperoxodisulfat

Die Durchführung der Polymerisationsreaktion erfolgt analog zu Beispiel 1. Das Copolymerisat hat die Glastemperatur -43°C und den K-Wert 92.

Vergleichsversuch 2:

Eine handelsübliche wässrige Dispersion eines Copolymerisats einer Glastemperatur von -40°C wurde mit in die anwendungstechnische Prüfung einbezogen. Der K-Wert des Copolymerisats beträgt >90.

Vergleichsversuch 3:

Eine Abmischung aus 100 Teilen einer handelsüblichen 50%igen wäßrigen Dispersion eines Copolymerisats aus 2-Ethylhexylacrylat und n-Butylacrylat einer Glastemperatur von -45°C und 20 Teilen eines Weichmachers auf Basis von Dioctylphthalat wurde ebenfalls in die anwendungstechnische Prüfung miteinbezogen. Der K-Wert des Copolymerisats beträgt 90.

Tabelle 1: Ergebnisse aus den anwendungstechnischen Prüfungen der Beispiele (B) und Vergleichsbeispiele (V).

| Beispiel | Schältest (N/2 cm) bei 23°C | Schertest (Minuten) bei 23°C | Schlingentest bei -20°C |
|---|---|---|---|
| 1 | 1,8 | 115 | 3,1 |
| 2 | 1,6 | 30 | 4,0 |
| 3 | 2,3 | 140 | 4,3 |
| 4 | 1,4 | 127 | 3,1 |
| 5 | 1,4 | 83 | 3,3 |
| 6 | 2,3 | 112 | 2,9 |
| Vergleichsversuch | | | |
| 1 | 3,2 | 1600 | 0,8 |
| 2 | 8,3 | 700 | 0,4 |
| 3 | 0,2 | 22 | 2,3 |

**Ansprüche**

1. 40 bis 70 %ige wäßrige Dispersionen von Copolymeren einer Glastemperatur von höchstens -45°C und eines K-Werts über 80 aus

(a) 80 bis 98 % ihres Gewichts eines oder mehrerer nicht tertiären Acrylsäureester 8 bis 12 C-Atome enthaltender Alkanole,

(b) 0 bis 18 % ihres Gewichts Acryl-oder Methacrylsäureester 1 bis 4 C-Atome enthaltender Alkanole und/oder Vinylester 2 bis 4 C-Atome enthaltender Carbonsäuren und/oder (Meth)Acrylnitril und/oder Styrol,

(c) 0,1 bis 4 % ihres Gewichts 3 bis 5 C-Atome enthaltenden $\alpha,\beta$-monoolefinisch ungesättigten Mono-und/oder Dicarbonsäuren und/oder deren gegebenenfalls an den Stickstoffatomen durch 1 bis 4 C-Atome enthaltende Alkyl-und/oder Carboxylgruppen substituierten Amiden und/oder Hydroxyalkyl(meth)-acrylaten mit 2 bis 5 C-Atomen in den Alkylgruppen und

(d) 0,01 bis 3 % ihres Gewichts $\alpha$-Methylstyrol.

2. 40-bis 70 %ige wäßrige Dispersionen von Copolymerisaten einer Glastemperatur von höchstens -45°C und eines K-Werts von 95 bis 100 aus

(a) 90 bis 95 % ihres Gewichts eines oder mehrerer nicht tertiären Acrylsäureester 8 bis 12 C-Atome enthalten der Alkanole,

(b) 0 bis 2 % ihres Gewichts an Monomeren aus der Gruppe Butylacrylat, Vinylacetat, Vinylpropionat, Vinyl-n-butyrat, Acrylnitril und Styrol,

(c) 1 bis 3 % ihres Gewichts an $\alpha,\beta$-monoolefinisch ungesättigten Carbonsäuren aus der Gruppe Acrylsäure, Methacrylsäure, Fumarsäure und Itaconsäure und

(d) 1 bis 2 % ihres Gewichts $\alpha$-Methylstyrol.

3. Verwendung der Dispersionen gemäß Anspruch 1 zur Herstellung selbstklebender Gebilde mit guter Haftklebrigkeit bei Temperaturen bis -40°C.